# EUROPÄISCHE PATENTSCHRIFT

(11) **EP 1 431 866 B1**
(45) Veröffentlichungstag und Bekanntmachung des Hinweises auf die Patenterteilung: **21.02.2007**
(21) Anmeldenummer: 03021854.9
(22) Anmeldetag: 26.09.2003
(51) Int. Cl.: G06F 3/00, G05B 23/02

(54) **HMI Einrichtung mit einem optischen Touch Screen**
Human Machine Interface with optical touch screen
Appareil HMI avec un écran tactil de type optique

(30) Priorität: 20.12.2002 DE 10260305
(43) Veröffentlichungstag der Anmeldung: 23.06.2004
(73) Patentinhaber: SIEMENS AKTIENGESELLSCHAFT, 80333 München (DE)
(72) Erfinder: Bischoff, Toni Gerhard, 91580 Petersaurach (DE)

(56) Entgegenhaltungen:
- EP-A- 0 393 368
- EP-A- 1 162 527
- WO-A-01/93182
- DE-A- 19 626 626
- US-A- 4 396 977
- ZWINGE P: "OBJEKTORIENTIERTES PROGRAMMIEREN UND VISUALISIEREN VON AUTOMATISIERUNGSSYSTEMEN" AUTOMATISIERUNGSTECHNISCHE PRAXIS - ATP, OLDENBOURG VERLAG. MUNCHEN, DE, Bd. 33, Nr. 9, 1. September 1991 (1991-09-01), Seiten 485-490, XP000264961 ISSN: 0178-2320

## Beschreibung

Die Erfindung betrifft eine HMI Einrichtung, die einem optischen Touch Screen aufweist.

Technische Einrichtungen werden vielfach mit Hilfe von digitalen, programmierbaren Datenverarbeitungssystemen gesteuert und bedient. Unter einer technischen Einrichtung wird jede Art von technischen Geräten und Systemen sowohl in Einzelanordnung als auch in einer z.B. über einen Feldbus datentechnisch vernetzten Anordnung verstanden. So sind unter technischen Einrichtungen bei einer industriellen Anwendung einzelne Betriebsmittel zu verstehen, wie z.B. Antriebe, Bearbeitungsmaschinen, intelligente Messgeber, Sensoren, u.v.m.. Eine technische Einrichtung kann aber auch eine gesamte Produktionsanlage sein, bei der mit lokal verteilten Betriebsmitteln ein gesamter technischer Prozess betrieben wird, z.B. eine chemische Anlage, eine Fertigungsstraße oder eine verarbeitende Anlage.

Technische Einrichtungen werden mit Hilfe von digitalen, programmierbaren Datenverarbeitungssystemen bedient und gesteuert, die vielfach in Form eines Automatisierungssystems bzw. eines Bestandteils davon ausgeführt sind. Dabei weisen Automatisierungssysteme spezielle Geräte auf, welche die Schnittstelle zwischen einem Bediener und dem Automatisierungssystem bilden. Solche Geräte werden allgemein als HMI Einrichtung, d.h. "Human Machine Interface", bezeichnet. Weiterhin wird dieses Gerätesegment als Vorrichtungen zum "Bedienen- und Beobachten" technischer Einrichtungen zu bezeichnen, abgekürzt als "B+B Geräte". Diese Geräte sind den zur unmittelbaren Steuerung einer technischen Einrichtung dienenden Geräten, wie z.B. den "PLC", d.h. Programmable Logic Controller, vorgelagert. Hierdurch wird eine zentrale Steuereinrichtung entlastet, z.B. eine speicherprogrammierbare Steuerung SPS.

Der Begriff HMI Einrichtung bzw. HMI Gerät ist als ein Oberbegriff zu verstehen und umfasst auch alle zu dieser Gruppe von Geräten gehörigen Komponenten. Als Beispiele für derartige Komponenten sollen z.B. "Operator Panels", die häufig als "Bedienpanels" bzw. kurz als "OP" bezeichnet werden, und als HMI Geräte bzw. dazugehörige Programmiergeräte eingesetzte Industrie-Personal-Computer IPC genannt werden. Da HMI Geräte eine besondere Funktionalität aufweisen, übernehmen diese z.B. in einem vernetzten Automatisierungssystem Funktionen, die allgemein als Vorgabe und Nachbearbeitung von Daten der zu steuernden technischen Einrichtung angesehen werden können. Diese Funktion wird allgemein auch mit "Supervisor Control and Data Akquisition" (SCADA) bezeichnet. Hierzu muss in der Regel von einer HMI Einrichtung eine spezielle Software ausgeführt werden. Hiermit werden durch ein HMI Gerät Funktionen ermöglicht, die Komfort, Qualität und Sicherheit einer Bedienung durch eine Bedienperson verbessern, z.B. die Übersicht über die zu bedienende Einrichtung und die Fehlerfreiheit von Bedienungen.

So können über HMI Geräte z.B. interaktive Prozessabbilder der zu bedienenden technischen Einrichtung visualisiert und bedient, aber auch projektiert und generiert werden. Hiermit ist einerseits eine selektive Anzeige von Reaktionen der technischen Einrichtung möglich, meist in Form von Messwerten und Meldungen. Andererseits wird es durch gezielte Vorgabe von Bedienhandlungen ermöglicht, die technische Einrichtung in gewünschte Zustände zu überführen. Zusätzlich zu diesen Funktionen "Beobachten und Bedienen" können mit einem HMI Gerät auch anlagenspezifische Projektierungen möglich sein, z.B. die Projektierung von interaktiven Prozessabbildern.

Die Gehäuse von bekannten HMI Geräten sind konstruktiv so gestaltet, dass diese möglichst bündig in ebene Flächen einbaubar sind, welche sich z.B. auf den Außenseiten von Schaltschränken, auf der Oberseite von industriellen Schalttafeln, Bedienpulten, Control Cabinets, u.ä. befinden. Dabei ist eine Gehäuseseite des HMI Gerätes als eine möglichst flache Bedienfront ausgebildet, die möglichst bündig auf der jeweiligen Fläche z.B. der Tür eines Schaltschrankes aufliegt. Die Kontaktfläche kann so ausgestaltet sein, dass die Gesamtanordnung die Anforderungen von bestimmten Schutzarten gegenüber Staub und Feuchtigkeit erfüllt, z.B. die Anforderungen der IP65 bzw. der NEMY4x. Die elektrischen und elektronischen Komponenten des HMI Geräts sind hinter der Bedienfront in einem boxförmigem Anbau untergebracht. Dieser weist Abmessungen auf, welche kleiner sind als die Kantenlängen der Bedienfront. Beim Einbau eines derartigen HMI Geräts z.B. in eine Fläche eines Schaltpultes, ist der boxförmige Anbau folglich in eine entsprechende Aussparung versenkbar, während die überstehende Bedienfront auf den Rändern der Aussparung aufliegt und diese vollständig abdeckt. Die Bedienfront ist meist vollständig gegen äußere Einflüsse, wie insbesondere Spritzwasser und Staub, abgedichtet und weist elektronische Anzeigeelemente, wie z.B. LCD-Displays, und Tasten bzw. Tastaturfelder auf. Dabei können die Tasten bzw. Tastaturfelder z.B. als Folientastaturen aufgebaut sein und eine anwendungsspezifische Anordnung und Beschriftung aufweisen. Weiterhin sind derartige Tastenfelder weitgehend gegen äußere Einflüsse abdichtbar. Bei anderen Ausführungen kann das HMI Gerät an der Bedienfront auch über ein Touch Display verfügen. Dieses ermöglicht die Auslösung von Schaltfunktionen durch Berührung von vorprogrammierten Flächen z.B. in einem anwendungsabhängig projektierten Prozessabbild. Zusätzliche Tasten bzw. Tastenfelder können bei einer derartigen Ausführung in der Regel entfallen.

HMI Geräte in den oben beschriebenen, weit verbreiteten und quasi als Standard anzusehenden klassischen Aufbautechniken weisen verschiedene Nachteile auf. So bieten HMI Geräte mit separaten Tastaturfeldern nur eingeschränkte Anpassungsmöglichkeiten. Dabei können den vorhandenen Tasten eines solchen HMI Geräts zwar u.U. veränderte Funktionen zugewiesen werden. Die Anzahl und Anordnung der Tasten ist aber konstruktiv natürlich nicht mehr veränderbar. Demgegenüber können z.B. Tastaturfelder, die auf HMI Geräten mit Touch Display angezeigt werden, anwendungsabhängig quasi beliebig an Veränderungen in dem dazugehörigen technischen Prozess angepasst werden. Der Einsatz eines Touchscreen bei einem HMI Gerät ist aber technisch aufwendig. Weiterhin kann der Einsatz von HMI Geräten mit einem Touchscreen insbesondere in einer rauhen, mit Schmutz belasteten Umgebung problematisch sein.

In US 4,396,977 ist ein System bekannt, dass es einen Computer, ein CRT-Display und eine transparente berührungssensitive Touchpanel, die sich auf dem Display befindet, umfasst. Zur Darstellung einer Anlage wird ein durch den Computer generiertes Symbol (Objekt) auf dem CRT-Display angezeigt, wobei das Symbol die Anlage repräsentiert. Durch die Anzeige des Symbols kann ein berührungssensitives Bereich auf der Touchpanel definiert werden. Wenn man z.B. das definierte Bereich berührt, kann die durch das Symbol repräsentiere Anlage gesteuert werden, wobei die Änderung des Symbols auch infolge der Steuerung auf dem CRT-Display dargestellt wird.

WO 01/93182 offenbart ein System, bei dem ein optisches Bild erzeugt werden kann. Durch das Bild wird zumindest ein Eingabebereich aufgewiesen, wobei ein Benutzer in diesem Bereich Eingabe machen kann. Die im System vorgesehenen Sensoren können die Bewegung des Benutzers erfassen und damit Signale erzeugen. Mittels einer Verarbeitungseinrichtung können die erzeugten Signale verarbeitet und eine entsprechende Funktion ausgeführt werde

Der Erfindung liegt die Aufgabe zu Grunde, eine andersartige Gestaltung für ein HMI Geräts für den industriellen Einsatz zu finden, welche einerseits möglichst unempfindlich ist gegenüber umweltbedingten Einflüssen, und weiterhin einem Anwender eine möglichst uneingeschränkte Anpassungsfähigkeit der Bedienumgebung an Veränderungen in dem zugeordneten technischen Prozess ermöglicht.

Die der Erfindung zu Grunde liegende Aufgabe wird mit den Merkmalen des im Anspruch 1 angegebenen HMI Geräts gelöst. Das erfindungsgemäße HMI Gerät dient zum Beobachten und Bedienen eines technischen Prozesses. Es enthält eine Verarbeitungseinrichtung zumindest zur datentechnischen Generierung von dynamischen Prozessabbildern, welche interaktive Bereiche aufweisen. Weiterhin ist zumindest eine optische Sende- und Empfangseinheit vorhanden, welche datentechnisch an die Verarbeitungseinheit angekoppelt ist. Diese weist Projektionsmittel zur Erzeugung von Lichtabbildern der dynamischen Prozessabbilder auf und weiterhin Detektionsmittel zur räumlichen Erfassung von Zeigeaktionen eines Bedieners auf interaktive Bereiche im Lichtabbild eines dynamischen Prozessabbilds.

Vorteilhafte Weiterbildungen des erfindungsgemäßen HMI Geräts sind in den Unteransprüchen angegeben. Weitere Unteransprüche sind gerichtet auf eine Einbauvorrichtung mit einem erfindungsgemäßen HMI Gerät, vorteilhafte Verwendungen eines HMI Geräts gemäß der Erfindung und auf ein Automatisierungssystem mit einem entsprechenden HMI Gerät.

Weitere vorteilhafte Ausführungsformen der Erfindung und die damit verbundenen Vorteile werden nachfolgend am Beispiel der in den Figuren dargestellten Ausführungsbeispiele der Erfindung näher erläutert werden.

Im Weiteren werden mit Bezugnahme auf die nachfolgend angeführten Zeichnungen Ausführungsbeispiele der Erfindung und die damit verbundenen Vorteile näher erläutert. Dabei zeigen
- Fig. 1: eine erste Ausführungsform für ein gemäß der Erfindung gestaltetes HMI Gerät in einer Seitenansicht, wobei das HMI Gerät vorteilhaft eine separate Tragplatte als Projektionsfläche aufweist und auf eine Montageöffnung einer Montagefläche flächig aufgelegt ist,
- Fig. 2: das beispielhafte HMI Gerät von Fig. 1 in einer Frontansicht, wobei das Lichtabbild des dynamischen Prozessabbildes einer "DRILLING MACHINE" auf die Tragplatte projiziert ist,
- Fig. 3: eine zweite Ausführungsform für ein gemäß der Erfindung gestaltetes HMI Gerät in einer Frontansicht, wobei deren optische Sende- und Empfangseinheit separate Projektionsmittel mit unterschiedlichen Grundfarben aufweist, um das farbige Lichtabbild (PEK) des dynamischen Prozessabbildes eines "SPINDLE DRIVE" auf die Tragplatte zu projizieren,
- Fig. 4: eine dritte Ausführungsform für ein gemäß der Erfindung gestaltetes HMI Gerät in einer Draufsicht, welches in der Art eines mobilen Geräts aufgebaut ist und dessen optische Sende- und Empfangseinheit in einen Schacht in der Verarbeitungseinheit versenkbar ist,
- Fig. 5: das HMI Gerät gemäß der Ausführungsform von Fig.4 in einer Seitenansicht,
- Fig. 6: eine vierte Ausführungsform für ein gemäß der Erfindung gestaltetes HMI Gerät in einer Draufsicht, welches ein Gehäuse in Form eines mobilen Hand- HeldTerminals aufweist,
- Fig. 7: die Draufsicht auf die Montagefläche einer Einbauvorrichtung, in welche ein HMI Gerät gemäß der Erfindung in Hinterwandmontagetechnik derart eingebaut ist, dass nur die optische Sende- und Empfangseinheit durch die Montagefläche hindurch reicht und die umgebende Oberfläche der Montagefläche als eine Projektionsfläche für dynamische Prozessabbilder dient,
- Fig. 8: einen Schnitt durch die Ausführung der Erfindung gemäß der Darstellung von Fig. 7, und
- Fig. 9: einen Schnitt durch eine der Darstellung von Fig. 5 entsprechende Ausführung der Erfindung, wobei die optische Sende- und Empfangseinheit wiederum in einen Schacht in der Verarbeitungseinheit versenkbar ist.

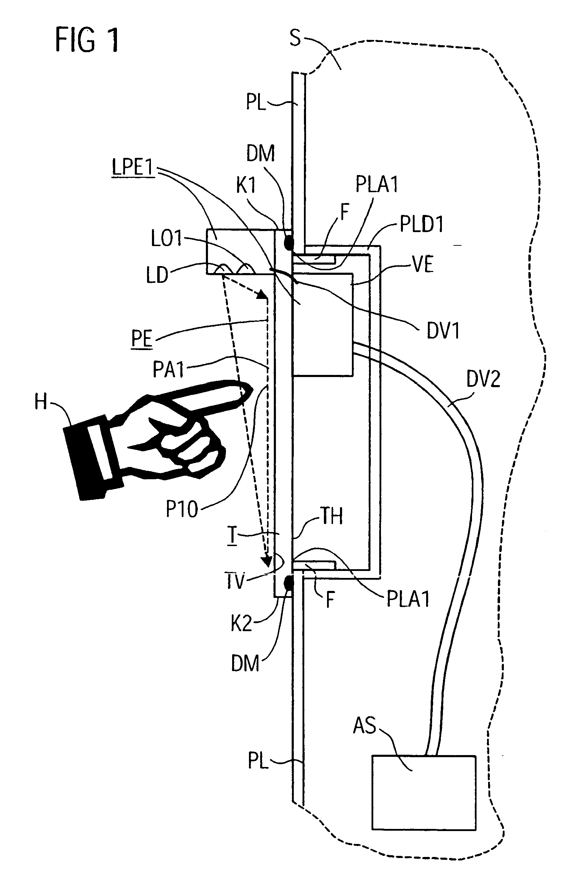

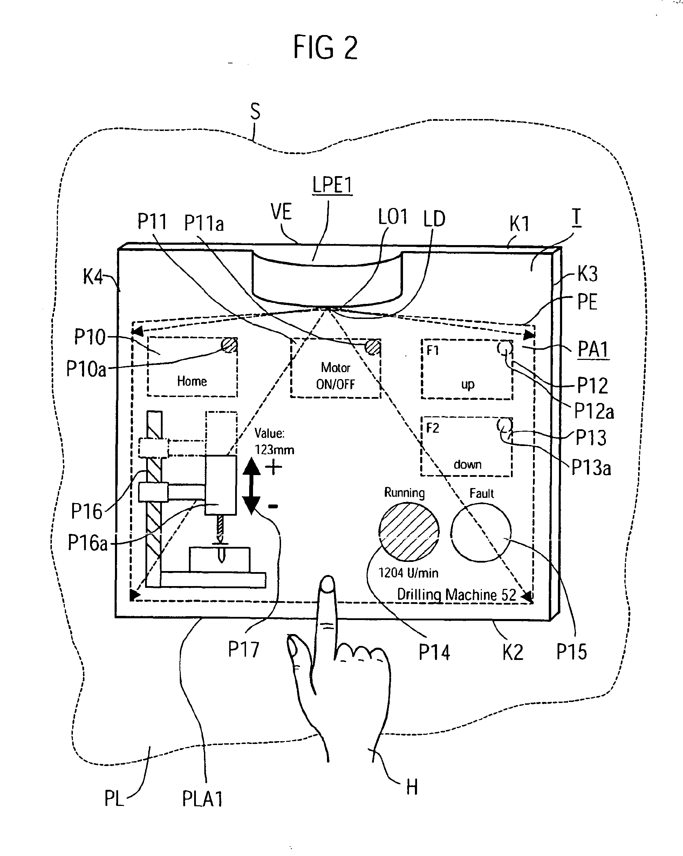

Fig. 1 zeigt eine erste Ausführungsform für ein gemäß der Erfindung gestaltetes HMI Gerät in einer Seitenansicht. Es enthält eine Verarbeitungseinrichtung VE zumindest zur datentechnischen Generierung von dynamischen Prozessabbildern. Diese weisen interaktive Bereiche auf, welche von einer Bedienperson aktiviert werden können. In Fig. 1 ist eine solche Aktivierung durch die Hand H einer Bedienperson symbolisiert, die auf einen beispielhaften interaktiven Bereich P10 im Lichtabbild PE eines vom HMI Gerät angezeigten dynamischen Prozessabbilds PA1 zeigt. Am Beispiel der Fig. 2, welche das beispielhafte HMI Gerät von Fig.1 in einer Frontansicht zeigt, wird nachfolgend das Lichtabbild PE des dynamischen Prozessabbildes PA1 einer "DRILLING MACHINE" noch näher erläutert werden.

Das HMI Gerät in Fig. 1 weist weiterhin zumindest eine optische Sende- und Empfangseinheit LPE1 auf, welche datentechnisch über eine erste Datenverbindung DV1 an die Verarbeitungseinheit VE angekoppelt ist. Ist das HMI Gerät eine Komponente in einem umfangreichen Automatisierungssystem, so findet in aller Regel ein Datenaustausch mit einer übergeordneten Zentralverarbeitungseinheit AS statt. Dabei handelt es sich um ein Automatisierungssystem, z.B. eine Steuerung vom Typ SIMATIK, welche aktuelle Messwerte von Prozess erfasst und zur Anzeige über eine weitere Datenverbindung DV2 an das HMI Gerät übergibt. Umgekehrt können Bediensignale, die von der Sende- und Empfangseinheit LPE1 erfasst wurden, vom HMI Gerät an das Automatisierungsgerät zurückübertragen werden.

Die optische Sende- und Empfangseinheit LPE1 des erfindungsgemäßen HMI Geräts weist Projektionsmittel LO1 zur Erzeugung eines Lichtabbilds PE des dynamischen Prozessabbilds PA1 auf, und weiterhin Detektionsmittel LD zur räumlichen Erfassung von Zeigeaktionen eines Bedieners H auf interaktive Bereiche P10 im Lichtabbild PE. Vorteilhaft sind die Projektionsmittel LO1 und Detektionsmittel LD in einem gemeinsamen Gehäuse der Sende- und Empfangseinheit LPE1 auf der Außenseite des HMI Geräts angebracht. Erfindungsgemäß spannen die Projektionsmittel ein Lichtfeld PE auf, welches in Fig. 1 durch strichlierte Pfeile symbolisiert ist, und von den Erfassungsmitteln LD möglichst vollständig überdeckt wird. Diese Erfassungsmittel LD ermöglichen z.B. auf Infrarotbasis eine positionsgenaue Erkennung von Zeigeaktionen, die z.B. von der Hand H einer Bedienperson auslöst werden. Eine hierdurch erfaßte Position kann in der Verarbeitungseinheit VE einem Bildelement im Prozessabbild zugeordnet und als eine Bedienung dieses Bildelementes interpretiert werden.
Auf Grund der durch die optische Sende- und Empfangseinheit des erfindungsgemäßen HMI Geräts für die Beobachtung und Bedienung eines technischen Prozesses eröffneten Möglichkeiten kann diese Einheit quasi als ein optischer bzw. virtueller Touchscreen bezeichnet werden. Die Bedienungen einer Person z.B. mittels deren Hand H erfolgen somit ohne Vermittlung mechanischer Elemente und somit völlig verschleißfrei. Wie aus Fig. 1 ersichtlich, ist bei der Erfindung nicht einmal eine Berührung erforderlich. Vielmehr ist zur Bedienung bereits ein Eintauchen eines Zeigegegenstandes, z.B. des Zeigefingers einer Hand H, in das Strahlungs- und Erfassungsfeld PE ausreichend. Verschmutzungsprobleme können somit nahezu vollständig vermieden werden. Weiterhin ist es vorteilhaft, wenn die Ansprechempfindlichkeit der optischen Sende- und Empfangseinheit durch eine projektierbare Erfassungsschwelle anwendungsabhängig eingestellt werden kann. Hierdurch können Fehlauslösungen von interaktiven Bereichen in einem dynamischen Prozeßabbild, z.B. durch vorbei fliegende Insekten, vermieden werden.
Weiterhin bietet das erfindungsgemäße HMI Gerät eine größtmögliche Anpassungsfähigkeit. In der Praxis ist die Konfiguration einer technischen Anlage auch im laufenden Betrieb Veränderungen unterworfen, die z.B. durch Reparaturen und Umbauten hervorgerufen werden können. Eine Ergänzung bzw. der Austausch von Messgebern, eine u.U. vorübergehende Stillegung bzw. Neuinbetriebnahme von Anlagenteilen u.v.m. macht in der Regel auch Anpassungen bei den zur Beobachtung und Bedienung eingesetzten HMI Geräten notwendig. Diese konnten bisher bei konventionellen HMI Geräten nur durch eine Anpassungen des jeweiligen Prozessabbildes berücksichtigt werden. Eine Anpassung von schaltungstechnisch vorhandenen Tastern hat sich naturgemäß auf deren Signalbelegung zu beschränken. Bei dem erfindungsgemäßen HMI Gerät treten derartige Beschränkungen nicht auf. Ein weiterer Vorteil des erfindungsgemäßen HMI Geräts wird darin gesehen, dass keine herkömmlichen LCD Displays mit vorgeschalteten Touch Screen Einheiten mehr benötigt werden. Die erfindungsgemäße Lösung ist somit nicht nur kostengünstiger, sondern auch robuster und selbst bei Temperaturen einsetzbar, die unterhalb des Gefrierpunktes liegen.

Es ist vorteilhaft, wenn das erfindungsgemäße HMI Gerät über eine gesonderte Tragplatte T verfügt, die als eine Projektionsfläche für das Lichtabbild PE des dynamischen Prozessabbilds PA1 dient. Insbesondere rauhe oder sehr farbige Oberflächen auf Einbauvorrichtungen sind nicht oder nur eingeschränkt als Projektionsfläche geeignet. In einem solchen Fall können durch eine Tragplatte T gleichbleibende, optimale Projektionsverhältnisse erzielt werden. Eine derartige Ausführung ist im Beispiel der Fig. 1 bereits berücksichtigt. Die vorteilhaft vertikal angebrachte Tragplatte T des HMI Geräts kann dabei besonders für industriellen Einsatz hergerichtet sein, z.B. eine Schmutz, Fette und Öle abweisende Oberfläche u.U. aufweisen. Die Oberfläche der Tragplatte T kann zu diesem Zweck beispielhaft einen sogenannten Lotus-Blatt Effekt aufweisen. Bei einer derartigen Ausführung ist es besonders vorteilhaft, wenn die mindestens eine optische Sende- und Empfangseinheit LPE1 des HMI Geräts auf der Vorderseite TH der Tragplatte T und die Verarbeitungseinheit VE auf der Hinterseite TH der Tragplatte T angebracht sind. Insbesondere zur Erreichung einer optimalen Ausnutzung der gesamten Oberfläche der Tragplatte T als Projektionsfläche ist die mindestens eine optische Sende- und Empfangseinheit LPE1 im Bereich einer Seitenkante der Tragplatte T angebracht, im Beispiel der Fig. 1 an der oberen Seitenkante K4. Die Datenverbindung DV1 zur Kopplung der Sende- und Empfangseinheit LPE1 mit der Verarbeitungseinheit VE ist dabei durch die Tragplatte T hindurchgeführt.

Im Ausführungsbeispiel der Fig. 1 wird das erfindungsgemäße HMI Gerät von einer Einbauvorrichtung S getragen. Diese kann auch für die Aufnahme von mehreren HMI Geräten und verschiedenen anderen Steuereinrichtungen, wie z.B. Not-Aus-Schaltern u.v.m. vorgesehen sein. Die Einbauvorrichtung S kann dabei bevorzugt ein Schaltschrank, ein Bedien- und/oder Steuerpult oder eine Schalttafel sein. Derartige Einbauvorrichtungen werden häufig als Auf- oder Einbausätze in Fahrzeugen, Lokomotiven, Schiffen, Kränen, Leitwarten von Kraftwerken u.v.m. eingesetzt. Die in Fig. 1 teilweise dargestellte beispielhafte Einbauvorrichtung S weist dabei eine vertikale Montagefläche PL zur Halterung des erfindungsgemäßen HMI Geräts auf. Es kann sich dabei z.B. um die Tür oder Seitenwand eines Schaltschrankes, die Frontfläche eines Bedien- und/oder Steuerpults oder einer Schalttafel handeln. Eine Zentralverarbeitungseinheit AS kann, falls vorhanden, vorteilhaft auch im Inneren der Einbauvorrichtung S angeordnet sein.

Bei einer besonders für den industriellen Einsatz geeigneten Ausführung des erfindungsgemäßen HMI Geräts weist die Tragplatte T relativ zu den Abmessungen der Verarbeitungseinheit VE derart vergrößerte Kantenlängen K1, K2, K3, K4 auf, so dass die Verarbeitungseinheit in eine Montageöffnung PLA1 in der Montagefläche PL einlegbar ist, während die quasi rundum überstehende Tragplatte T dann die Montageöffnung PLA1 vollständig umlaufend abdeckt. Eine derartige Ausführung ist im Beispiel der Fig. 1 ebenfalls bereits dargestellt. Das erfindungsgemäße HMI Gerät kann dann möglichst bündig in der Art eines Panels quasi auf die Montagefläche aufgelegt werden. Bei dieser Ausführung des HMI Geräts als einlegbares Panel, bei dem die Tragplatte T die Funktion einer quasi allseitig überstehenden Frontplatte aufweist, ist es vorteilhaft, wenn die Tragplatte T zumindest umlaufenden im Bereich der Seitenkanten K1, K2, K3, K4 Mittel DM zur hermetischen Abdichtung gegenüber dem Rand Montageöffnung PLA1 aufweist.

Falls die Tragplatte T, die optische Sende- und Empfangseinheit LPE1 und die Verarbeitungseinheit VE des HMI Geräts vorteilhaft eine autarke Baueinheit bilden, ist es einem Bediener möglich, diese Einheit auch in der Art eines mobilen Gerätes bei Bedarf von der Montageöffnung PLA1 abzunehmen und als eine Hand- Bedienplatte zu benutzen. Dies wird dann weiter erleichtert, wenn die Datenverbindung DV2 zwischen der Verarbeitungseinrichtung VE und einer Zentralverarbeitungseinheit AS kabellos ist, d.h. bevorzugt eine Funkstrecke darstellt. Nach Abschluss von Bedienungen, die von Betriebspersonal z.B. in unmittelbarer räumlicher Nähe zu einem betroffenen Betriebsmittel des dazugehörigen technischen Prozesses vorgenommen werden, kann der Bediener das HMI Gerät wieder in Montageöffnung PLA1 zurücklegen und damit für zukünftige Bedienungen frei geben. Bei einer derartigen Ausführung ist die Montageöffnung PLA1 vorteilhaft auf der Innenseite der Tragfläche PL über eine rückseitige Abdeckung PLD1 verschlossen. Weiterhin wird eine Entnahme des HMI Geräts aus und eine erneute Einlage in die Montageöffnung PLA1 durch geeignet platzierte Führungsschenkel F auf der Rückseite der Tragplatte T erleichtert.

Fig. 2 zeigt das beispielhafte HMI Gerät von Fig. 1 in einer Frontansicht, wobei das Lichtabbild PE das dynamische Prozessabbildes PA1 einer "DRILLING MACHINE 52" auf die Tragplatte T projiziert ist. Wie bereits an Fig. 1 erläutert, ist die separate Tragplatte T über eine dahinter liegende Montageöffnung PLA1 in der Montagefläche PL flächig aufgelegt und mit dieser umlaufend über alle Seitenkanten K1, K2, K3, K4 hermetisch abgedichtet. Die Verarbeitungseinheit VE auf der Rückseite der Tragplatte T ist somit vollständig in das Innere der Einbauvorrichtung S eingelegt. Vorteilhaft ist die optischen Sende- und Empfangseinheit LPE1 mit den integrierten Projektionsmitteln LO1, insbesondere einer Laserquelle mit Laseroptik, und den integrierten Detektionsmitteln LD, z.B. einem CCD Sensor, annähernd im Zentrum der oberen Seitenkante K1 platziert. Hiermit kann der Großteil der Oberfläche der Tragplatte T als Projektionsfläche genutzt werden. Das Projektions- und Erfassungsfeld PE ist im Beispiel der Fig. 2 zum besseren Verständnis durch eine breite Strichlinie und durch auf die Ecken des Feldes PE gerichtete Pfeile symbolisch aufgespannt.

Das in Fig. 1 beispielhaft dargestellte erste, frei projektierbare Prozessabbild PA1 betrifft einen Bohrautomaten in einer Fertigungsstraße, der mit "drilling machine 52" bezeichnet ist. Für dessen Visualisierung ist ein dynamisches Betriebsmittelabbild P16 vorgehen. Dieses kann verschiedene Stellungen des Bohrerkopfes P16a anzeigen, z.B. den ausgefahrenen Zustand im oberen Totpunkt bzw. den aktiven Zustand bei Ablauf einer Bohraktion. Eine Istwertanzeige P17 "VALUE" meldet die aktuelle Bohrkopfhöhe.

Das in Fig. 1 dargestellte dynamische Prozessabbild PA1 weist weiterhin interaktive Bereiche P10 bis P15 auf. Jedem dieser Bereiche ist eine separate Schaltstatusanzeige P11a bis P15a in Form eines virtuellen Lämpchens im rechten oberen Eck des jeweiligen interaktiven Bereiches zugeordnet. Dabei hat der erste interaktive Bereiche P10 die Funktion eines virtuellen Schaltelementes P10. Eine Bedienung des Bereiches P10 z.B. durch eine darauf gerichtete Zeigeaktion mittels einer Hand H ermöglicht ein Rücksetzen der Anzeige in einen mit "HOME" bezeichneten Ausgangszustand. Ein zweites virtuelles Schaltelement P11 ist mit "MOTOR_ON/OFF" beschriftet und ermöglicht durch eine Bedienung der erfindungsgemäßen HMI Einrichtung in der Art eines virtuellen Touch Screens die Zu- bzw. Abschaltung des Antriebsmotors des Bohrautomaten. Über ein drittes virtuelles Schaltelement P12 "F1_up" bzw. ein viertes virtuelles Schaltelement P13 "F2_down" kann der Bohrerkopf P16a gehoben bzw. in eine Arbeitsposition abgesenkt werden. Erste und zweite Zustandsanzeigen "RUNNING" P14 und "FAULT" P15 zeigen schließlich den Betriebszustand des Bohrerantriebs an.

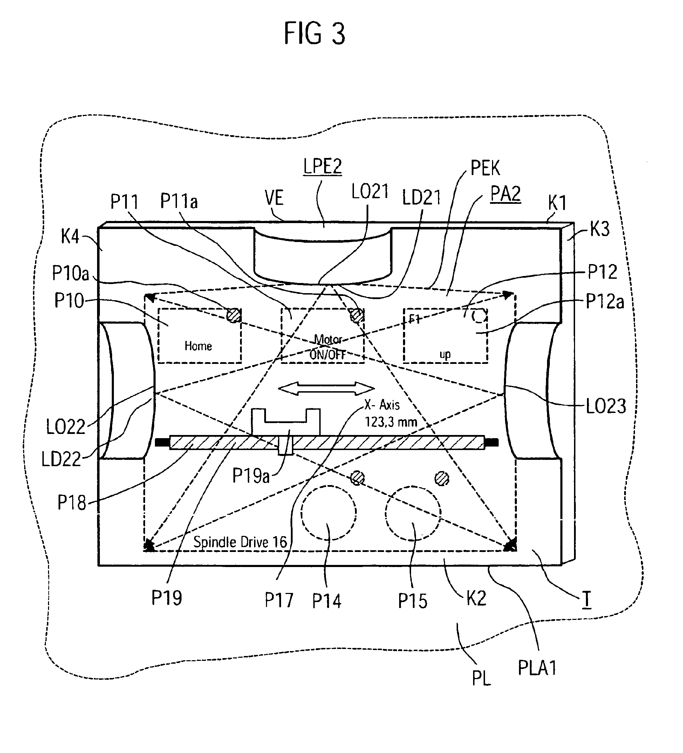

Fig. 3 zeigt eine zweite Ausführungsform für ein gemäß der Erfindung gestaltetes HMI Gerät in einer Frontansicht, wobei deren optische Sende- und Empfangseinheit LPE2 beispielhaft drei separate Projektions- und Detektionsmittel aufweist. Dabei sind beispielhaft die drei Projektionsmittel LO21, LO22, LO23 an den Längskanten K1, K3, K4 platziert. Jede dieser Projektionsmittel strahlt in einer unterschiedlichen Grundfarbe, so dass ein farbiges Lichtabbild PEK auf die Tragplatte T projiziert werden kann. Bei einer anderen, nicht dargestellten Ausführung ist es grundsätzlich auch möglich, dass die verschieden farbigen Projektionsmittel L021, L022, L023 in einem gemeinsamen, z.B. an der oberen Längskante platzierten Gehäuse untergebracht sind.

Die im Beispiel der Fig. 3 vorgenommene Verteilung der Projektionsmittel LO21, LO22, LO23 auf die drei Längskanten K1, K3, K4 bietet die weitere Möglichkeit, dass zusätzlich auch separate Detektionsmittel räumlich verteilt angeordnet werden können. So ist neben dem Projektionsmittel LO21 bzw. LO22 je ein Detektionsmittel LD21 bzw. LD22 platziert. Grundsätzlich können auch mehr als zwei separate Detektionsmittel eingesetzt werden. Das farbige Projektions- und Erfassungsfeld PEK wird somit von zwei versetzen Detektionsmitteln überwacht. Dies hat den Vorteil, dass aus dem Blickwinkel eines Detektionsmittels keine Verdeckungen von in einer Linie hintereinander platzierten interaktiven Bereichen auftreten können. Im Beispiel der Fig. 3 wird durch strichliierte Pfeile symbolisiert, die von jedem Projektionsmittel LO21, LO22, LO23 ausgehen. Das Projektions- und Erfassungsfeld PEK ist somit mehrfach überdeckt.

Diese Ausführung hat den Vorteil, dass z.B. bei einer sogenannten "Zwei-Hand-Bedienung" möglich ist, die für besonders sicherheitsrelevante Bedienhandlungen vorgeschrieben ist. Würde beispielsweise eine zweite Zeigeaktion auf einen quasi dahinter liegenden, interaktiven Bereich durch eine erste Zeigeaktion auf einen davor liegenden, interaktiven Bereich für ein Detektionsmittel verdeckt sein, so könnte die zweite Zeigeaktion durch das versetzt oder gegenüberliegend angeordnete zweite Detektionsmittel sicher erkannt werden. Es ist mit dieser Ausführung des erfindungsgemäßen HMI Geräts, dass einen quasi virtuellen Touchscreen aufweist, somit auch möglich, sicherheitsrelevante "Zwei-Hand-Bedienungen" durchzuführen. Weiterhin sind auch sogenannten "Mehrfinger-Bedienungen" möglich, d.h. Bedienungen, die eine gleichzeitige Aktivierung von mehreren interaktiven Bereichen in einem dynamischen Prozessabbild bewirken.

Das HMI Gerät im Beispiel der Fig. 3 zeigt ein beispielhaftes zweites, frei projektierbares und dynamisches Prozessabbild PA2 für einen Linearantrieb, der mit "Spindel Drive 16" bezeichnet ist. Dementsprechend zeigt das dazugehörige dynamische Betriebsmittelabbild P18 den Linearantrieb mit einer Antriebsspindel P19 und einem davon geführten Schlitten P19a. Der Schlitten P19a wird dabei dynamisch in einer etwa seiner tatsächlichen relativen Lage auf der Spindel entsprechenden Position angezeigt. Die interaktiven Bereiche P10 bis P15 und die den interaktiven Bereichen zugeordneten separaten Schaltstatusanzeigen P11a bis P15a in Form eines virtuellen Lämpchens im rechten oberen Eck des jeweiligen interaktiven Bereiches entsprechend weitgehend der Ausführung im dynamischen Prozessabbild PA1 von Fig. 1. Schließlich ist ebenfalls eine Istwertanzeige P17 "X-AXIS" vorhanden, welche die relative Lage des Schlittens auf der Spindel meldet.

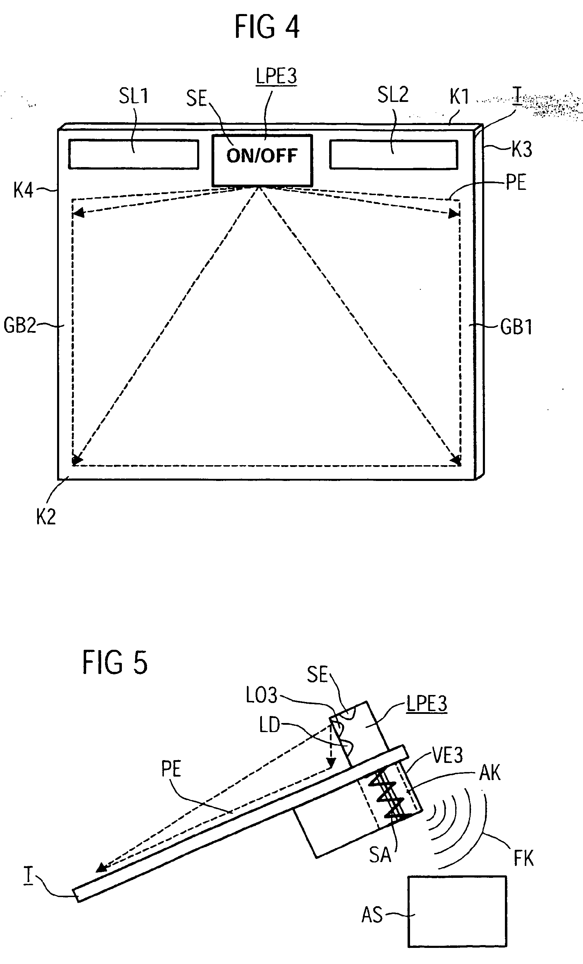

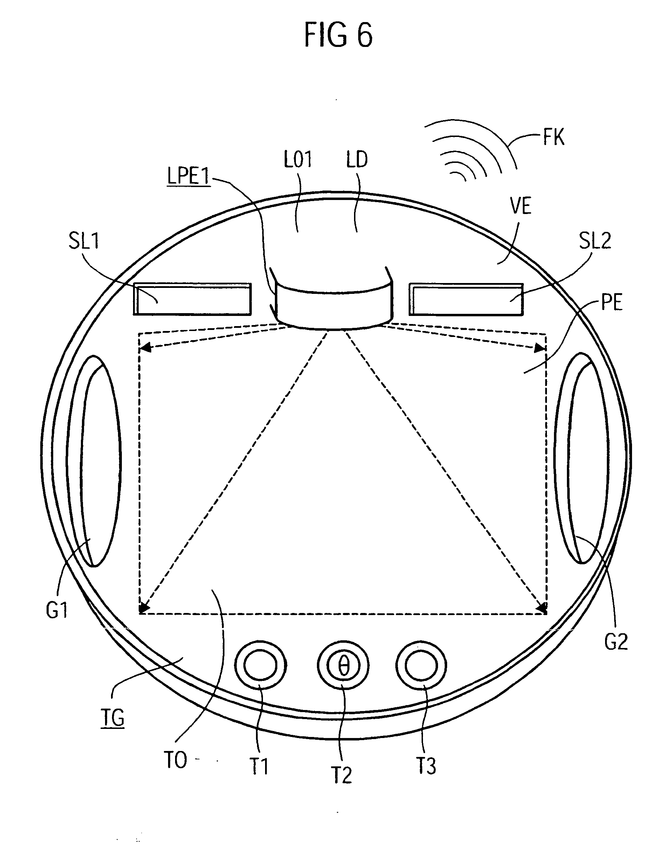

Fig. 4 zeigt eine dritte Ausführungsform für ein gemäß der Erfindung gestaltetes HMI Gerät in einer Draufsicht, welches in der Art eines mobilen Geräts aufgebaut ist und dessen optische Sende- und Empfangseinheit in einen Schacht in der Verarbeitungseinheit versenkbar ist. Fig. 5 zeigt das HMI Gerät von Fig. 4 in einer Seitenansicht. Beide Fig. 4 und 5 sollen nachfolgend zusammenhängend erläutert werden.

Die Tragplatte T des HMI Geräts von Fig. 4 ist wie ein Zeichen- bzw. Schreibbrett für einen Anwender problemlos handhabbar. Bevorzugt sind die vertikalen Seitenkanten K3, K4 der Tragplatte T z.B. durch zusätzliche rutschhemmende Oberflächenbeschichtungen als Griffbereiche GB1, GB2 ausgebildet. Die Ausführung des HMI Geräts von Fig. 4 ist besonders für mit Schmutz belasteten Anwendungen geeigneten. Dabei bilden die mindestens eine optische Sende- und Empfangseinheit LPE3 und die bevorzugt unmittelbar dahinter platzierte Verarbeitungseinheit VE3 eine derartige Baueinheit, dass die optische Sende- und Empfangseinheit LPE3 in einen Schacht AK innerhalb der Verarbeitungseinheit VE3 versenkbar ist. Die in der Sende- und Empfangseinheit LPE3 enthaltenen Projektionsmittel LO3 und Detektionsmittel LD sind somit im versenkten Zustand gegen nahezu jegliche äußere Beeinträchtigung geschützt. Vorteilhaft schließt im versenkten Zustand die Oberseite der optischen Sende- und Empfangseinheit LPE3 möglichst bündig mit der Oberfläche der umgebenden Tragplatte T ab. Fig. 3 zeigt die Sende- und Empfangseinheit LPE3 im ausgefahrenen Zustand.

Vorteilhaft sind zusätzlich Servo-Antriebsmittel SA zum Ein- und Ausfahren der optischen Sende- und Empfangseinheit LPE3 in den bzw. aus dem Schacht AK der Verarbeitungseinheit VE3 vorhanden. Diese können von einem Bediener anwendungsabhängig z.B. über ein Schaltelement SE, welches sich vorteilhaft auf der Oberseite der Sende- und Empfangseinheit LPE3 befindet und in Fig. 4 mit "ON/OFF" bezeichnet ist, aktiviert werden. Die Handhabbarkeit im mobilen Einsatz kann weiter dadurch erhöht werden, dass das HMI Gerät eine kabellose Datenverbindung FK, insbesondere eine Funkschnittstelle, zwischen der Verarbeitungseinrichtung VE3 und einer Zentralverarbeitungseinheit AS z.B. eines Automatisierungssystems aufweist. Schließlich ist es vorteilhaft, wenn wenigstens eine Solarzelle zumindest zur Energieversorgung der optischen Sende-und Empfangseinheit LPE3 und der Verarbeitungseinheit VE3 vorhanden sind. Im Beispiel der Fig. 4 ist beidseitig der optischen Sende- und Empfangseinheit LPE3 jeweils eine Solarzelle SL1,SL2 vorhanden.

Fig. 6 zeigt eine vierte Ausführungsform für ein gemäß der Erfindung gestaltetes HMI Gerät in einer Draufsicht, welche ein Gehäuse TG in Form eines mobilen Hand-Held-Terminals aufweist. Die Form des Gehäuses TG weist vorzugsweise eine runde bzw. ovale Außenkontur ohne vorstehende Stoßkanten auf. Vorteilhaft sind an den Seiten zwei gegenüber liegende, muldenförmige Griffbereiche G1, G2 aus dem Gehäuse ausgespart. Die dazwischen liegende Gehäuseaußenseite TO dient als Projektionsfläche für das Lichtabbild PE eines dynamischen Prozessabbilds. Dieses wird wiederum von einer optischen Sende- und Empfangseinheit LPE1 erzeugt, die im oberen Krümmungsbereich des Gehäuses TG auf der Gehäuseoberseite TO hervorsteht und beidseitig von Solarzellen SL1, Sl2 zur autonomen Stromversorgung umgeben ist. Zur Energiepufferung sind dann wieder aufladbare Akkumulatoren und/oder Stützbatterien im Inneren des Hand-Held-Terminals vorhanden.

Der in Fig. 6 dargestellte Aufbau hat den weiteren Vorteil, dass die Verarbeitungseinheit VE geschützt im Inneren des Gehäuses TG untergebracht und nur der Teil der optischen Sende-und Empfangseinheit LPE1, welcher die Projektionsmittel LO1 und die Detektionsmittel LD enthält, aus dem Inneren des Gehäuses durch eine entsprechend gestaltete und abgedichtete Öffnung nach außen hindurch geführt ist. Das Gehäuse TG kann dann rundum eine einheitliche Schutzart gegenüber Staub und Feuchte aufweisen. Ist zumindest die optische Sende- und Empfangseinheit LPE1 vollständig vergossen, so ist ein Einsatz auch im Unterwasserbereich möglich.

Auf der Oberseite eines derartigen mobilen Hand-Held-Terminals können noch eine Vielzahl andere, insbesondere mechanische Schalt- und Bedienelemente platziert sein. Im unteren Krümmungsbereich des Gehäuses TG auf der Gehäuseoberseite TO sind somit beispielhaft ein Not-Aus-Schalter T1, ein Schlüsselschalter T2, und ein Ein-Aus-Schalter T3 vorhanden. Vorteilhaft weist auch hier die Verarbeitungseinheit VE im Inneren des Gehäuses eine kabellose Datenübertragungsstrecke FK zu einer Zentralverarbeitungseinheit auf.

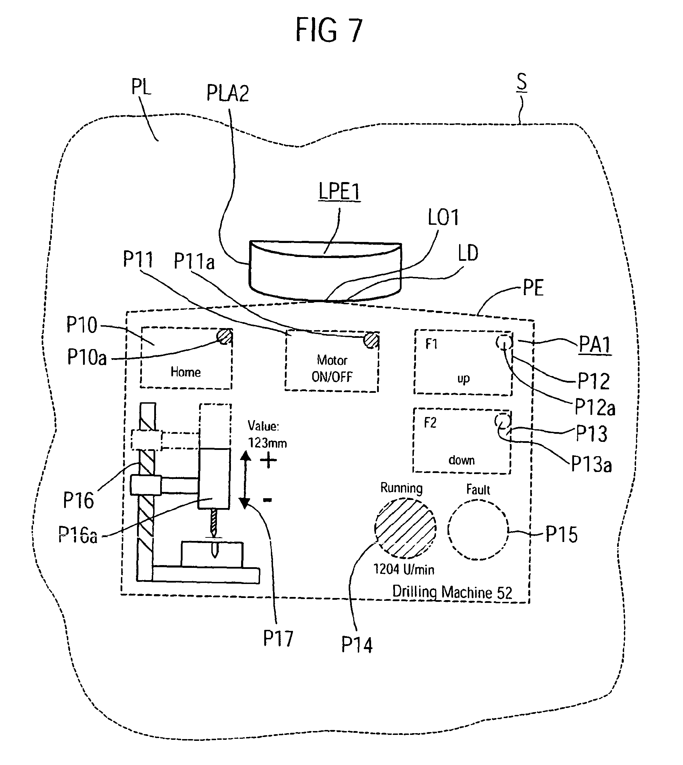

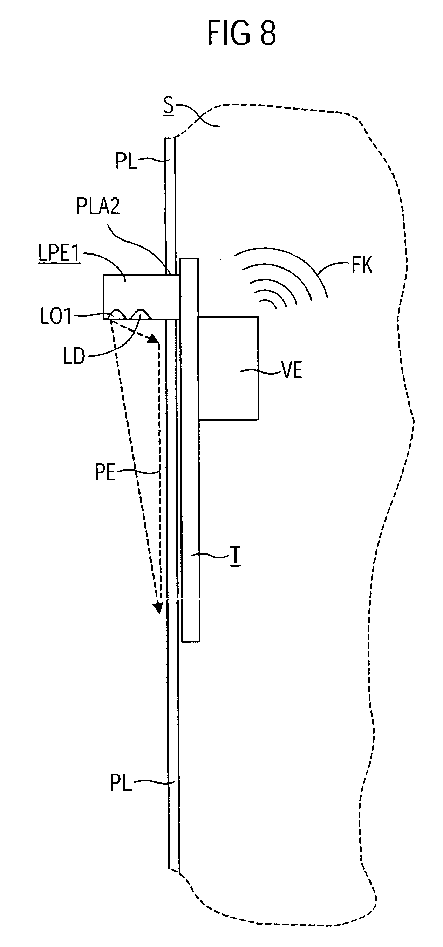

Fig. 7 zeigt die Draufsicht auf die Montagefläche PL einer Einbauvorrichtung S, in welche ein HMI Gerät gemäß der Erfindung in Hinterwandmontagetechnik derart eingebaut ist, dass nur die optische Sende- und Empfangseinheit LPE1 durch die Montagefläche PL hindurch reicht und die umgebende Oberfläche der Montagefläche unmittelbar als eine Projektionsfläche für das Lichtabbild PE eines dynamischen Prozessabbildes PA1 dient. Das beispielhaft dargestellte Prozessabbild PA1 entspricht dabei der Ausführung von Fig. 1. In Ergänzung zeigt Fig. 8 den dazugehörigen Schnitt durch die Ausführung der Erfindung gemäß der Darstellung von Fig. 7. Die Fig. 7 und Fig. 8 sollen nachfolgend gemeinsam erläutert werden.

Die in Fig. 7 nur in einem kleinen Ausschnitt gezeigte Einbauvorrichtung S, z.B. ein Schaltschrank, verfügt über eine beispielhaft vertikale Montagefläche PL. Hierbei kann es sich z.B. um eine Tür oder Seitenwand des Schaltschrankes handeln. Diese weist erfindungsgemäß eine zweite Montageöffnung PLA2 auf, deren Abmessungen auf die Kantenlängen der optischen Sende- und Empfangseinheit LPE1 abgestimmt sind. Diese kann somit von hinten durch die Montageöffnung PLA2 hindurchgesteckt werden. Die restlichen Komponenten des erfindungsgemäßen HMI Geräts, d.h. zumindest die Verarbeitungseinheit VE und eine eventuell vorhandene Tragplatte T verbleiben im Inneren der Einbauvorrichtung VE und somit gegen äußere Einflüsse abgeschirmt. Wie in Fig. 8 bereits dargestellt ist es vorteilhaft, wenn auch hier die Verarbeitungseinheit VE im Inneren des Gehäuses eine kabellose Datenübertragungsstrecke FK zu einer Zentralverarbeitungseinheit aufweist, welche auch im Inneren der Einbauvorrichtung S, z.B. einem Schaltschrank, untergebracht sein kann. Falls es erforderlich sein sollte, kann in diesem Fall die Baueinheit aus der optischen optischen Sende- und Empfangseinheit LPE1, der Verarbeitungseinheit VE und einer gegebenenfalls dazwischen montierten Tragplatte T von einem Benutzer von der Innenseite der Montagefläche PL abgenommen und wie die Ausführung von Fig. 4 als autonome eine Bedieneinheit ortsunabhängig eingesetzt werden. Der Abstand zur Einbauvorrichtung S ist nur durch die Reichweite der Datenübertragungsstrecke FK begrenzt.

Die Baueinheit aus mindestens der optischen Sende- und Empfangseinheit LPE1 und der Verarbeitungseinheit VE ist hinter der Montageöffnung mittels Hinterwandmontagemitteln so gehalten, dass nur die optische Sende- und Empfangseinheit LPE1 durch die Montagefläche PL hindurch reicht und die umgebende Oberfläche der Einbauvorrichtung S als eine Projektionsfläche für ein dynamisches Prozessabbilder dient. Handelt es sich bei der Montagefläche PL beispielhaft um die Tür eines Schaltschrankes, so kann die gesamte Außenfläche der Schaltschranktür als Projektionsfläche genutzt werden. In einem solchen Fall können selbst komplexe dynamische Prozessabbilder hochauflösend wiedergegeben werden. Im Beispiel der Fig. 7 wird dabei das der Fig. 2 entsprechende Prozessabbild PE projiziert. Bei den Hinterwandmontagemitteln kann es sich um herkömmliche Haltemittel, wie z.B. Schraub- und Klemmverbindungen, bzw. magnetische Haltemittel oder Haft- bzw. Klebeverbindungen handeln. Diese sind zur besseren Übersicht im Schnitt der Fig. 8 nicht dargestellt.

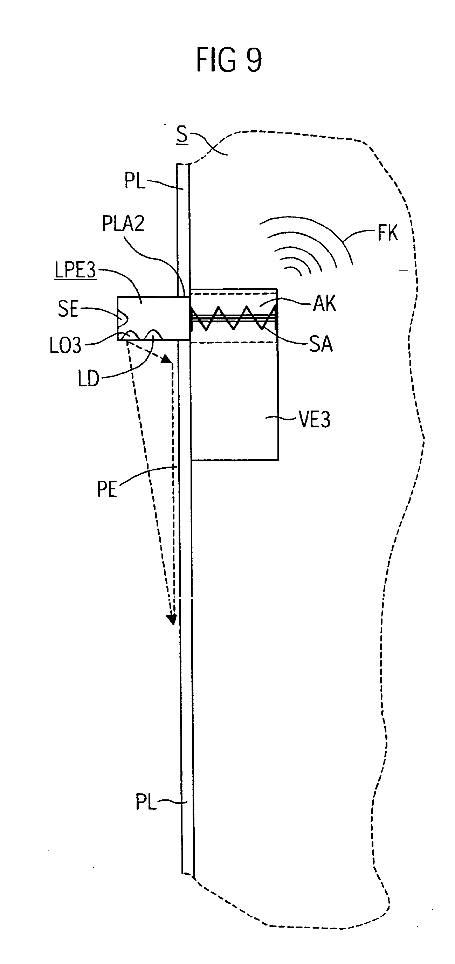

Die in den Figuren 7 und 8 dargestellte Ausführung kann vorteilhaft um die bereits am Beispiel der Figuren 4 und 5 erläuterte Möglichkeit einer bevorzugt servoelektrisch angetriebenen Ein- und Ausfahrbarkeit der optischen Sende- und Empfangseinheit erweitert werden. Dementsprechend ist in der Schnittdarstellung von Fig. 9 eine Verarbeitungseinheit VE3 gezeigt, die einen Aufnahmeschacht AK für die optischen Sende- und Empfangseinheit LPE3 aufweist. Für das Ein- und Ausfahren sind Servo-Antriebsmittel SA vorhanden, die über ein Schaltelement SE auf der Oberseite der optischen Sende- und Empfangseinheit LPE3 aktiviert werden können. Bei dem in Fig. 9 dargestellten ausgefahrenen Zustand weist das HMI Gerät die gleiche Funktionalität auf wie die Ausführung in Fig. 8. Auch hier dient die Oberfläche der Montagefläche PL bevorzugt unterhalb der Sende- und Empfangseinheit LPE3 als Projektionsfläche. Im eingefahrenen Zustand schließt die Oberseite der Sende- und Empfangseinheit LPE3 vorteilhaft bündig mit der Montagefläche PL ab, so dass nur Schaltelement SE von außen zugänglich ist.

Ein HMI Gerät gemäß der vorliegenden Erfindung ist besonders geeignet zur Beobachtung und Bedienung einer technischen Einrichtung, insbesondere als Operator Panel bzw. Hand - Held - Terminal zur Maschinenbedienung und Maschinenüberwachung. Weiterhin kann ein Automatisierungssystem, das auf eine technische Einrichtung einwirkt, mindestens ein angeschaltetes oder in dieses integriertes, erfindungsgemäßes HMI Panel aufweisen.

Die HMI Geräte gemäß der vorliegenden Erfindung sind auch bei beengten Platzverhältnissen gut einsetzbar. So werden z.B. in der Kunststoffbranche, d.h. insbesondere bei Kunststoffspritzgussmaschinen typischerweise keine Schaltschränke eingesetzt. Vielmehr dienen die eigentlichen Maschinenträger als Einbauvorrichtungen für HMI Panels und sonstige elektrische Einrichtungen. Durch den mechanischen Aufbau haben bekannte HMI Panels den Nachteil, dass das Display immer kleiner sein muss als der Einbauort selbst, da für Displayhalterungen und Montage entsprechend Platz benötigt wird. Mit einem HMI Gerät gemäß der vorliegenden Erfindung können derartige Beschränkungen überwunden werden, da es möglich ist, die gesamte zur Verfügung stehende Fläche unterhalb der optischen Sende- und Empfangseinheit zum Bedienen und Beobachten eines technischen Prozesses zu benutzen.

## Patentansprüche

1. HMI Gerät zum Beobachten und Bedienen eines technischen Prozesses, mit
a) einer Verarbeitungseinrichtung (VE) zumindest zur datentechnischen Generierung von dynamischen Prozessabbildern (PA1;PA2), die interaktive Bereiche (P10 - P15) aufweisen, und mit
b) zumindest einer optischen Sende- und Empfangseinheit (LPE1;LPE2;LPE3), welche datentechnisch an die Verarbeitungseinheit (VE) angekoppelt ist (DV1), und aufweist **dadurch gekennzeichnet, daß** die optische Sende- und Empfangseinheit
b1) Projektionsmittel (LO1;LO12,LO22,LO23;LO3) zur Erzeugung von Lichtabbildern (PE;PEK) der dynamischen Prozessabbilder (PA1;PA2), und
b2) Detektionsmittel (LD) zur räumlichen Erfassung von Zeigeaktionen eines Bedieners (H) auf interaktive Bereiche (P10 - P15) im Lichtabbild (PE;PEK) eines dynamischen Prozessabbilds (PA1;PA2) aufweist, und des HMI Gerät weiterhin
c) eine Tragplatte (T) als eine Projektionsfläche für das Lichtabbild (PE; PEK) eines dynamischen Prozessabbilds (PA1; PA2), wobei die mindestens eine optische Sende- und Empfangseinheit (LPE1;LPE2;LPE3) auf der Vorderseite (TV) der Tragplatte (T) und die Verarbeitungseinheit (VE) auf der Hinterseite (TH) der Tragplatte (T) angebracht ist, aufweist.

2. HMI Gerät nach Anspruch 1, wobei die mindestens eine optischen Sende- und Empfangseinheit (LPE1;LPE2; LPE3) im Bereich einer Seitenkante (K1 - K4) der Tragplatte (T) angebracht ist.

3. HMI Gerät nach Anspruch 2, wobei die Tragplatte (T) relativ zur Verarbeitungseinheit (VE) derart vergrößerte Kantenlängen (K1 - K4) aufweist, dass die Verarbeitungseinheit in eine erste Montageöffnung (PLA1) in einer Montagefläche (PL) einlegbar ist und die Tragplatte (T) dabei die Montageöffnung (PLA1) vollständig umlaufend abdeckt.

4. HMI Gerät nach einem Anspruch 2 oder 3, wobei Tragplatte (T), optische Sende- und Empfangseinheit (LPE1; LPE2; LPE3) und Verarbeitungseinheit (VE) eine Baueinheit bilden.

5. HMI Gerät nach einem der Ansprüche 2 bis 4, wobei die Tragplatte (T) zumindest umlaufenden an den Seitenkanten (K1 - K4) Mittel (DM) zur hermetischen Abdichtung aufweist.

6. HMI Gerät nach Anspruch 1, welches ein Gehäuse (TG) in Form eines mobilen Hand-Held-Terminals aufweist und eine Gehäuseaußenseite (TO) als eine Projektionsfläche für das Lichtabbild (PE) eines dynamischen Prozessabbilds (PA1;PA2) dient.

7. HMI Gerät nach einem der vorangegangenen Ansprüche, wobei die mindestens eine optische Sende- und Empfangseinheit (LPE3) und die Verarbeitungseinheit (VE3) eine derartige Baueinheit bilden, dass die optische Sende- und Empfangseinheit (LPE3) in einen Schacht (AK) in der Verarbeitungseinheit (VE3) versenkbar ist.

8. HMI Gerät nach Anspruch 7, mit Servo-Antriebsmitteln (SA,SE) zum Ein- und Ausfahren der optischen Sende- und Empfangseinheit (LPE1;LPE2;LPE3) in den Schacht (AK) der Verarbeitungseinheit (VE).

9. HMI Gerät nach einem der vorangegangenen Ansprüche, wobei die optische Sende- und Empfangseinheit (LPE2) separate Projektionsmittel (LO1,LO2,LO3) für unterschiedliche Grundfarben zur Projektion farbiger Lichtabbilder (PEK).

10. HMI Gerät nach einem der vorangegangenen Ansprüche, wobei die optische Sende- und Empfangseinheit (LPE2) separate Detektionsmittel (D01, D02) zur Auflösung einer sicherheitsrelevanten "Zwei-Hand-Bedienung" und/oder einer "Mehrfinger-Bedienung" eines dynamischen Prozessabbildes (PA2) aufweist.

11. HMI Gerät nach einem der vorangegangenen Ansprüche, mit einer kabellosen Datenverbindung (FK) zwischen der Verarbeitungseinrichtung (VE) und einer Zentralverarbeitungseinheit (AS) insbesondere eines Automatisierungssystems.

12. HMI Gerät nach einem der vorangegangenen Ansprüche, mit zumindest einer Solarzelle (SL1,SL2) zumindest zur Energieversorgung der optischen Sende- und Empfangseinheit (LPE1;LPE2;LPE3) und der Verarbeitungseinheit (VE3).

13. HMI Gerät nach einem der vorangegangenen Ansprüche, mit einer projektierbaren Erfassungsschwelle zur Einstellung der Ansprechempfindlichkeit der optischen Sende- und Empfangseinheit (LPE1;LPE2;LPE3).

14. HMI Gerät nach einem der vorangegangenen Ansprüche, wobei zumindest die optische Sende- und Empfangseinheit (LPE1,LPE2) für einen Einsatz im Unterwasserbereich vollständig abgedichtet, insbesondere vergossen, ist.

15. Einbauvorrichtung (S) mit mindestens ein HMI Gerät nach einem der vorangegangenen Ansprüche 1 bis 16.

16. Einbauvorrichtung (S) nach Anspruch 15, mit einer zweite Montageöffnung (PLA2) in einer Montagefläche (PL) und Hinterwandmontagemitteln für eine Baueinheit aus mindestens einer optischen Sende- und Empfangseinheit (LPE1; LPE2;LPE3) und einer Verarbeitungseinheit (VE), und wobei die Montageöffnung und die Hinterwandmontagemittel so gestaltet sind, dass nur die optische Sende- und Empfangseinheit (LPE1;LPE2;LPE3) durch die Montagefläche (PL) hindurch reicht und die umgebende Oberfläche der Einbauvorrichtung (S) als eine Projektionsfläche für dynamische Prozessabbilder (PLA1;PLA2) dient.

17. Einbauvorrichtung nach Anspruch 15 oder 16, wobei die Einbauvorrichtung (S) ein Schaltschrank ist.

18. Einbauvorrichtung nach Anspruch 15 oder 16, wobei die Einbauvorrichtung (S) ein Bedien- und/oder Steuerpult ist.

19. Einbauvorrichtung nach Anspruch 15 oder 16, wobei die Einbauvorrichtung (S) eine Schalttafel ist.

20. Automatisierungssystem, das auf eine technische Einrichtung einwirkt und an das mindestens ein HMI Panel nach einem der vorangegangenen Ansprüche 1 bis 16 geschaltet oder in dieses integriert ist.

## Claims

1. HMI device for monitoring and control of a technical process, comprising:
a) a processing module (VE), at least for computer-generating dynamic process images (PA1; PA2) that have interactive regions (P10-P15), and
b) at least one optical transmitter and receiver module (LPE1;LPE2;LPE3) that has a data link (DV1) to the processing module (VE), **characterised in that** the optical transmitter and receiver module comprises
b1) projection means (LO1;LO12,LO22,LO23;LO3) for generating light images (PE; PEK) of the dynamic process images (PA1;PA2), and
b2) detection means (LD) for spatially detecting pointing actions of an operator (H) to interactive regions (P10-P15) in the light image (PE;PEK) of a dynamic process image (PA1;PA2), and the HMI device further comprises
c) a support plate (T) as a projection area for the light image (PE; PEK) of a dynamic process image (PA1; PA2), with the at least one optical transmitter and receiver module (LPE1; LPE2; LPE3) being mounted to the front side (TV) of the support plate (T) and processing module is mounted to the rear side (TH) of the support plate (T).

2. HMI device according to claim 1, wherein the at least one optical transmitter and receiver module (LPE1; LPE2; LPE3) is mounted in a lateral edge area (K1-K4) of the support plate (T).

3. HMI device according to claim 2, wherein the support plate (T) has edge lengths (K1-K4) longer than respective edge lengths of the processing module (VE), such that the processing module can be inserted into a first mounting opening (PLA1) in a mounting surface (PL), and wherein the support plate (T) completely covers the mounting opening (PLA1).

4. HMI device according to one of claims 2 or 3, wherein the support plate (T), the optical transmitter and receiver module (LPE1; LPE2; LPE3) and the processing module (VE) form a physical unit.

5. HMI device according to one of claims 2 to 4, wherein the support plate (T) has means (DM) for a hermetic seal at least circumferentially along edges of the support plate (K1-K4).

6. HMI device according to claim 1, comprising a housing (TG) in the form of a mobile handheld terminal and an external housing side (TO) providing a projection area for the light image (PE) of a dynamic process image (PA1;PA2).

7. HMI device according to one of the preceding claims, wherein the at least one optical transmitter and receiver module (LPE3) and the processing module (VE3) form a physical unit such that the optical transmitter and receiver module (LPE3) can be retracted into a recess (AK) in the processing module (VE3).

8. HMI device according to claim 7, having servo drive means (SA, SE) for retracting and extending the optical transmitter and receiver module (LPE1; LPE2; LPE3) into and from the recess (AK) of the processing module (VE).

9. HMI device according to one of the preceding claims, wherein the optical transmitter and receiver module (LPE2) comprises separate projection means (LO1, LO2, LO3) for different primary colours for projecting the light images (PEK) in colour.

10. HMI device according to one of the preceding claims, wherein the optical transmitter and receiver module (LPE2) comprises separate detection means (DO1, DO2) for resolving a safety-related two-handed control and a multi-finger control of a dynamic process image (PA2).

11. HMI device according to one of the preceding claims, further comprising a wireless data link (FK) between the processing module (VE) and a central processing unit (AS), in particular an automation system.

12. HMI device according to one of the preceding claims, comprising at least one solar cell (SL1, SL2), at least for supplying power to the optical transmitter and receiver module (LPE1; LPE2; LPE3) and to the processing module (VE3).

13. HMI device according to one of the preceding claims, having a configurable detection threshold for adjusting the sensitivity of the optical transmitter and receiver module (LPE1; LPE2; LPE3).

14. HMI device according to one of the preceding claims, wherein at least the optical transmitter and receiver module (LPE1, LPE2) is completely sealed for underwater applications.

15. Mounting device (S) with at least one HMI device according to one of the preceding claims 1 to 16.

16. Mounting device (S) according to claim 15, having a second mounting opening (PLA2) in a mounting surface (PL) and rear wall mount for a physical unit composed of at least one optical transmitter and receiver module (LPE1; LPE2; LPE3) and a processing module (VE), and wherein the mounting opening and the rear wall mount are configured such that only the optical transmitter and receiver module (LPE1; LPE2; LPE3) projects through the mounting surface (PL) and the surrounding surface of the mounting device (S) provides a projection area for dynamic process images (PLA1; PLA2)

17. Mounting device according to claim 15 or 16, wherein the mounting device (S) is a switchgear cabinet.

18. Mounting device according to claim 15 or 16, wherein the mounting device (S) is an operator console and/or a control console.

19. Mounting device according to claim 15 or 16, wherein the mounting device (S) is a control panel.

20. Automation system which acts upon a technical installation, and to which the at least one human-machine interface according to one of the preceding claims 1 to 16 is connected or is integrated therein.

## Revendications

1. Interface homme-machine pour observer et contrôler un processus technique comportant
a) une unité de traitement (VE) au moins pour générer par informatique des reproductions dynamiques de processus (PA 1 ; PA 2) qui présentent des zones interactives (P 10 à P 15) et
b) au moins une unité optique d'émission et de réception (LPE 1 ; LPE 2 ; LPE 3) couplée (DV 1) par informatique à l'unité de traitement (VE),
**caractérisée en ce que** l'unité d'émission et de réception comporte
b 1) des moyens de projection (LO 1 ; LO 12 ; LO 22 ; LO 23 ; LO 3) pour produire des reproductions lumineuses (PE ; PEK) des reproductions de processus (PA 1 ; PA 2) et
b 2) des moyens de détection (LD) pour détecter dans l'espace des indications réalisées par l'opérateur (H) sur des zones interactives (P 10 à P 15) dans la reproduction lumineuse (PE, PEK) d'une reproduction de processus (PA 1, PA 2) dynamique
et l'interface homme-machine comporte en outre
c) une plaque d'appui (T) sous forme de surface de projection pour la reproduction lumineuse (PE, PEK) d'une reproduction dynamique de processus (PA 1, PA 2), l'au moins une unité optique d'émission et de réception (LPE 1 ; LPE 2 ; LPE 3) étant appliquée sur le côté avant (TV) de la plaque d'appui (T) et l'unité de traitement (VE) sur le côté arrière (TH) de la plaque d'appui (T).

2. Interface homme-machine selon la revendication 1, dans laquelle l'au moins une unité optique d'émission et de réception (LPE 1, LPE 2, LPE 3) est appliquée dans la zone d'un bord latéral (K 1 à K 4) de la plaque d'appui (T).

3. Interface homme-machine selon la revendication 2, dans laquelle la plaque d'appui (T) a, par rapport à l'unité de traitement (VE), des longueurs de bord (K 1 à K 4) agrandies de telle manière que l'unité de traitement peut être introduite dans une première ouverture de montage (PLA 1) située dans une surface de montage (PL) et que la plaque d'appui (T) recouvre alors sur tout le pourtour l'ouverture de montage (PLA 1).

4. Interface homme-machine selon l'une des revendications 2 ou 3, dans laquelle la plaque d'appui (T), l'unité optique d'émission et de réception (LPE 1, LPE 2, LPE 3) et l'unité de traitement (VE) forment une unité structurelle.

5. Interface homme-machine selon l'une des revendications 2 à 4, dans laquelle la plaque d'appui (T) comporte des moyens (DM) d'étanchéité hermétique au moins sur le pourtour des bords latéraux (K 1 à K 4).

6. Interface homme-machine selon la revendication 1, équipée d'un boîtier (TG) sous forme d'un terminal à main mobile et d'un côté extérieur de boîtier (TO) qui sert de surface de projection pour la reproduction lumineuse (PE) d'une reproduction dynamique de processus (PA 1 ; PA 2).

7. Interface homme-machine selon l'une des revendications précédentes, dans laquelle l'au moins une unité optique d'émission et de réception (LPE 3) et l'unité de traitement (VE 3) forment une unité structurelle de telle manière que l'unité d'émission et de réception (LPE 3) peut être enfoncée dans un puits (AK) situé dans l'unité de traitement (VE 3).

8. Interface homme-machine selon la revendication 7, équipée de servocommandes (SA, SE) pour faire entrer et sortir les unités optiques d'émission et de réception (LPE 1 ; LPE 2 ; LPE 3) dans le puits (AK) situé dans l'unité de traitement (VE).

9. Interface homme-machine selon l'une des revendications précédentes, dans laquelle l'unité optique d'émission et de réception (LPE 2) comporte des moyens de projection (LO 1, LO 2, LO 3) distincts pour différentes couleurs de fond afin de projeter des reproductions lumineuses (PEK) en couleurs.

10. Interface homme-machine selon l'une des revendications précédentes, dans laquelle l'unité optique d'émission et de réception (LPE 2) comporte des moyens de détection (DO 1, DO 2) distincts pour déclencher un « contrôle à deux mains » lié à la sécurité et/ou un « contrôle à plusieurs doigts » d'une reproduction dynamique de processus (PA 2).

11. Interface homme-machine selon l'une des revendications précédentes, équipée d'une liaison de données (FK) sans câble entre l'unité de traitement (VE) et une unité centrale de traitement (AS), en particulier d'un système d'automatisation.

12. Interface homme-machine selon l'une des revendications précédentes, équipée d'au moins une cellule solaire (SL 1, SL 2) au moins pour alimenter en énergie les unités optiques d'émission et de réception (LPE 1 ; LPE 2 ; LPE 3) et l'unité de traitement (VE 3).

13. Interface homme-machine selon l'une des revendications précédentes, comportant un seuil de détection projetable pour régler le seuil de sensibilité de l'unité optique d'émission et de réception (LPE 1 ; LPE 2 ; LPE 3).

14. Interface homme-machine selon l'une des revendications précédentes, dans laquelle au moins l'unité optique d'émission et de réception (LPE 1, LPE 2) est entièrement étanche, en particulier scellée, pour une utilisation sous l'eau.

15. Dispositif de montage (S) comportant au moins une interface homme-machine selon l'une des revendications précédentes 1 à 16.

16. Dispositif de montage (S) selon la revendication 15, comportant une deuxième ouverture de montage (PLA 2) dans une surface de montage (PL) et des moyens de montage à l'arrière d'une paroi pour une unité structurelle formée d'au moins une unité optique d'émission et de réception (LPE 1 ; LPE 2 ; LPE 3) et d'une unité de traitement (VE), l'ouverture de montage et les moyens de montage à l'arrière d'une paroi sont alors construits de telle manière que seule l'unité optique d'émission et de réception (LPE 1 ; LPE 2 ; LPE 3) traverse la surface de montage (PL) et la surface environnante du dispositif de montage (S) sert de surface de projection pour des images dynamiques de processus (PA 1 ; PA 2).

17. Dispositif de montage selon la revendication 15 ou 16, dans lequel le dispositif de montage (S) est une armoire de distribution.

18. Dispositif de montage selon la revendication 15 ou 16, dans lequel le dispositif de montage (S) est un pupitre de contrôle et/ou de commande.

19. Dispositif de montage selon la revendication 15 ou 16, dans lequel le dispositif de montage (S) est un panneau de distribution.

20. Système d'automatisation qui agit sur un dispositif technique et sur lequel est monté au moins un panneau d'interface homme-machine selon l'une des revendications précédentes 1 à 16 ou y est intégré.
